Europäisches Patentamt

(19) European Patent Office

Office européen des brevets

(11) Publication number: **0 089 431**
**B1**

(12) # EUROPEAN PATENT SPECIFICATION

(45) Date of publication of patent specification: **04.02.87**

(21) Application number: **82301521.9**

(22) Date of filing: **24.03.82**

(51) Int. Cl.⁴: **G 01 V 1/40**

(54) **Apparatus for and a method of acoustic well logging.**

(43) Date of publication of application:
**28.09.83 Bulletin 83/39**

(45) Publication of the grant of the patent:
**04.02.87 Bulletin 87/06**

(84) Designated Contracting States:
**DE FR GB NL**

(56) References cited:
**FR-A-2 321 709**
**US-E- 30 827**

(73) Proprietor: **MOBIL OIL CORPORATION**
**150 East 42nd Street**
**New York New York 10017 (US)**

(72) Inventor: **Caldwell, Richard Louis**
**606 Eli Avenue**
**Dallas Texas (US)**

(74) Representative: **Cooper, John Anthony et al**
**Mobil Court 3 Clements Inn**
**London WC2A 2EB (GB)**

## Description

This invention relates to apparatus for a method of acoustic well logging, particularly in poorly consolidated formations, such as unconsolidated sands or overburdens.

It has long been known to log open wellbores acoustically to determine the velocities of compressional ("P") waves and shear ("S") waves traveling through rock formations located in the well bore region. Logging devices have been used for this purpose which normally comprise a sound source (transmitter) and one or more receivers disposed at pre-selected distances from the sound source. For example, Kitsunezaki has suggested one such device for use in shear wave logging wherein the transmitter is located 3.2 meters from the first of 5 receivers, which are spaced 1 meter apart down an elastic rubber tube which is intended acoustically to isolate these elements from each other (see "A New Method for Shear Wave Logging", by Choro Kitsunezaki, Oyo Technical Note RP-4101, Oyo Corporation, Urawa Saitama 336 Japan, October, 1978).

By timing the travel of compressional waves, shear waves, and/or tube waves between the transmitter and each receiver, it is normally possible to determine the nature of surrounding rock formations. Thus, for example, French Patent No. 2321709 discloses a system for detecting fissures in rock formations using a logging tool which includes a spaced transmitter and receiver for compression rays and a separate spaced transmitter and receiver for shear waves. A similar system is disclosed in US Reissue No. 30827.

In logging loosely consolidated formations, however, it is often difficult to distinguish between compressional, shear, tube and secondary waves which may comprise portions of a wave train arriving at a given receiver. The use of remotely spaced, multiple receivers is thus intended to aid in distinguishing between arriving wave fronts and from noise in the system. Multiple receivers permit the recognition of similar wave patterns and wave fronts and patterns which are closely spaced at proximate receiver locations will separate by the time of their receipt at remote receiver locations.

Various signal timing and wave front analysis methods have also been suggested for distinguishing between wave fronts received at a given receiver. Most of these methods involve timing circuits which anticipate the receipt of, and facilitate the collection of, such wave front information. For descriptions of various logging techniques for collecting and analyzing compressional wave, shear wave, tube wave, and secondary wave data, please refer to U.S. Patents 3,333,238 (Caldwell), 3,362,011 (Zemanek, Jr.), and U.S. Reissue 24,446 (Summers).

In the design of logging tools, various types of transmitters, such as, piezoelectric or magnetostrictive transmitters, have been suggested for creating acoustic logging signals. For conventional logging operations, most such transmitters have been centrally located in the borehole, and have been adapted to generate sound which is radiated in a multidirectional (360°) pattern from the transmitter to adjacent wellbore surfaces. Such transmitters are well suited for creating compressional waves in surrounding rock and sand formations.

Since compressional waves travel faster than those shear, tube or secondary waves which may also be produced by a multidirectional transmitter, calculation of compressional wave velocity is accomplished by presuming that the first arriving wave front or wave pattern is that of a compressional wave. In loosely consolidated formations, subsequent arrivals of shear waves, tube waves and/or secondary waves are difficult to distinguish. In such formations, multidirectional transmitters tend to generate compressional waves of much greater amplitude than any shear waves also produced thereby. Recognition of shear wave arrivals, is thus particularly difficult.

Recently, attention has been directed to developing transmitters which are particularly suited to shear wave logging. Such transmitters generally attempt to achieve a single point source application of sound energy to the borehole wall. The theory behind point source transmitters, as generally outlined in the above-mentioned Kitsunezaki paper, is that they are capable of directly generating S waves. Conventional multidirectional transmitters are said to be capable only of indirectly creating shear waves. Accordingly, point source type transmitters produce shear waves of substantially higher amplitudes than heretofore possible with conventional multidirectional P wave transmitters. Accordingly, formations, such as loosely consolidated or unconsolidated sand, which do not propagate shear waves in sufficient amplitudes to permit definitive detection using conventional P wave receivers, may now be shear wave logged with these S wave logging systems. Oyo Technical Notes RP-4105, entitled "Development of a Suspension Type S-Wave Log System", by Kimio Ogura (November 1979) and RP-4125, entitled "Development of the Suspension S-Wave Logging System (Report No. 2)", by Kimio Ogura, et al (November 1980) provide additional information relating to S-wave logging systems.

In spite of the above described developments in logging techniques and apparatus, difficulty is nonetheless encountered in logging open boreholes, particularly those boreholes disposed through unconsolidated or loosely consolidated formations, such as sandstone or sand. In order to obtain the best possible logging data, it is important to log boreholes as soon as drilling is completed. Drilling mud has a tendency to damage the logging characteristics of an open borehole, and may interfere with the gathering of reliable logging data if time is permitted to elapse between the completion of drilling and the logging operation. Not only is rig time extremely costly (currently on the order of $50,000 to $100,000 per day) but there are inherent dangers in prolonging any logging operation. For example, many boreholes will not stay open for extended periods of time. It is thus important to expedite the logging operation to obviate any necessity to reinsert pipe into the borehole to flush with mud. Accordingly, a need exists with loosely consolidated formations to obtain all data which may be collected through the use of both conventional and shear wave logging apparatus, and to do so in a manner which permits the efficient, reliable collection of such data from an open, recently drilled borehole.

The invention resides in well logging apparatus for continuously logging the shear and compressional wave transmission characteristics of materials located adjacent to a borehole; comprising:

(a) a plurality of selectively activatable transmitters, said transmitters comprising a first, multidirectional compressional wave transmitter and a second, point source shear wave transmitter;

(b) a plurality of receivers, at least one for each transducer, mounted in spaced relation from said transmitters, said receivers comprising a first, compressional wave receiver exhibiting a relatively greater sensitivity to acoustic waves produced by said first transmitter, and a second, shear wave receiver exhibiting relatively greater sensitivity to acoustic waves produced by said second transmitter; characterized by

(c) sequencing means for selectively energizing the first transmitter in response to the detection of a shear wave by said second receiver and for energizing said second transmitter in response to the detection of a compressional wave by said first receiver.

In a preferred embodiment, a plurality of receivers are provided which are spaced apart from each of the transmitters at selected intervals along an acoustically isolating logging conduit. At least one, and preferably two, receivers which are relatively more sensitive to shear waves produced by the point source type transmitter, are located closest to this transmitter. This juxtaposition of transmitters and receivers takes advantage of the differing travel times of shear and compressional waves to permit rapid cycling of the device to collect optimal amounts of logging information. Preferably, cycle speed is increased by alternatively energizing each transmitter in response to the receipt of a suitable signal at the alternate wave-type receiver.

In an alternative embodiment, which is intended for use under conditions when increased acoustic isolation with in the logging apparatus is desired, the multidirectional compressional wave transmitter is disposed between the compressional wave receivers and the shear wave receivers. In this embodiment, all the shear wave receivers are disposed closer to the compressional wave transmitter than is the closest compressional wave receiver to that transmitter. In this manner, receipt of a compressional wave by the closest compressional wave receiver will ensure that the compressional waves generated by the compressional wave transmitter have passed by the shear wave receivers prior to onset of their duty cycles.

The present invention will now be more particularly described with reference to the accompanying drawings, in which:

Figure 1 is a diagrammatic illustration of well logging apparatus according to one example of the invention disposed within a borehole in an unconsolidated sand,

Figure 2 is a diagrammatic illustration similar to Figure 1 of well logging apparatus according to a second example of the invention, and

Figure 3 is a diagram which illustrates the preferred sequencing of the logging device illustrated in Figure 1 and which shows, starting from the top of the diagram, the energization of the compressional transmitter (PT) and the point source transmitter (ST), representative signals received by each of the compressional wave receivers ($P_1$, $P_2$ and $P_3$), representative signals received by the shear wave receivers ($S_1$ and $S_2$), and the preferred gating (G) for each of the aforementioned receivers, alternate gating modes being shown in dotted outline.

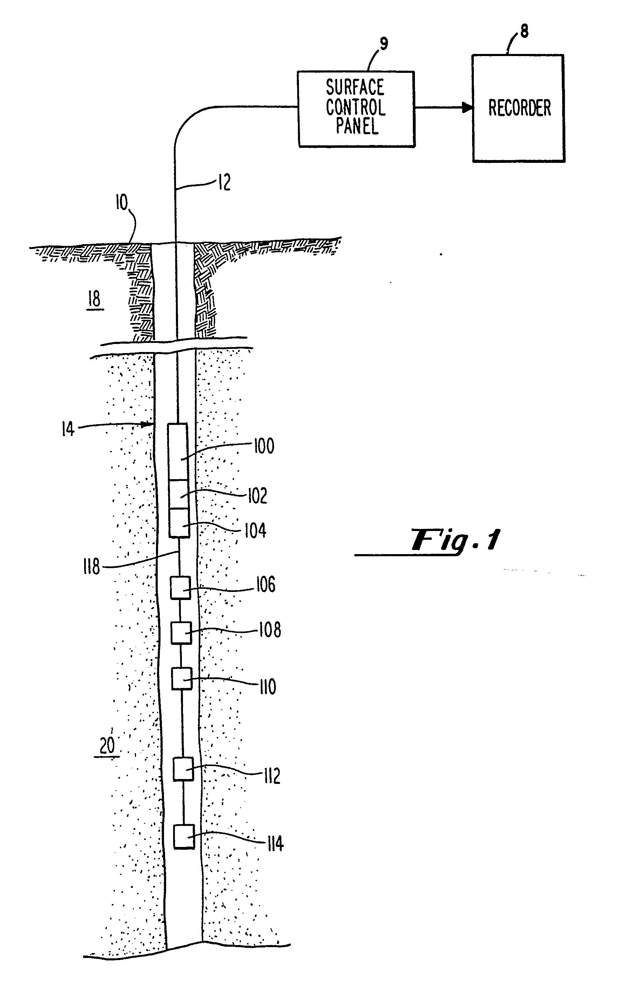

Referring to Figure 1, the apparatus of the first example is shown disposed in an open borehole 14 which, although foreshortened for purposes of illustration, may be seen to extend from the ground surface 10 through overburden 18 eventually to and through a sand layer 20. Although not illustrated in Figure 1, borehole 14 would normally be filled with a fluid, such as drilling mud, in which logging is conducted. The logging apparatus of the first example is shown disposed within the borehole 14 adjacent the sand layer 20 and connected to a surface control panel 9 and recorder 8 by a conventional cable 12.

The logging apparatus shown in Figure 1 comprises an upper body portion having an electronics section 100 and a multidirectional, compressional (P) transmitter 102 and a point source (uni-directional), shear wave transmitter 104 disposed in the order stated below the electronics section 100. The multidirectional transmitter 102 may be a piezoelectric or magnetostrictive transmitter of the type known in the art for producing suitably recordable compressional waves. The preferred shear transmitter 104 is a bender type transmitter which is described in our U.S. Patent Application Serial No. 106,076. Suspended below transmitters 102 and 104 are a series of spaced apart receivers 106—114. Each of these receivers is suspended on an acoustically isolating conduit 118, which may be of the rubber hose type described in the aforementioned Kitsunezaki paper.

Receivers 106 and 108 are preferably shear type receivers also of the bender type, as described in the aforementioned U.S. Patent Application Serial No. 106,076. These receivers are characterized by their high sensitivity to shear (s) waves and their relatively low sensitivity to compressional and tube waves. In the preferred embodiment, shear wave receiver 106 is located about 1,3—1,97 m (4—6 feet), preferably about 1,64 m (5 feet), below shear wave transmitter 104, and shear wave receiver 108 is located approximately 0,66—1,64 m (2—5 feet) below shearwave receiver 106. In this configuration, the distance between shear wave transmitter 104 and remote shear wave receiver 108 ranges from a minimum of about 1,97 m (6 feet) to a maximum of about 3,6 m (11 feet).

Suspended below shear wave receivers 106 and 108 are a plurality of compressional wave receivers 110, 112 and 114. These compressional wave receivers may be of the conventional magnetostrictive or piezoelectric type, which are characterized by relatively high sensitivities to compressional and tube waves, and relatively lower sensitivities to shear waves. In the preferred embodiment, compressional wave receiver 110 is disposed at a distance of about 4,3—5,8 m (13—17 feet) preferably 4,9 m (15 feet), from compressional transmitter 102. Second and third compressional receivers 112 and 114 are suspended below receiver 110 at spacings of about 1,3—1,97 m (4—6 feet), preferably about 1,64 m (5 feet).

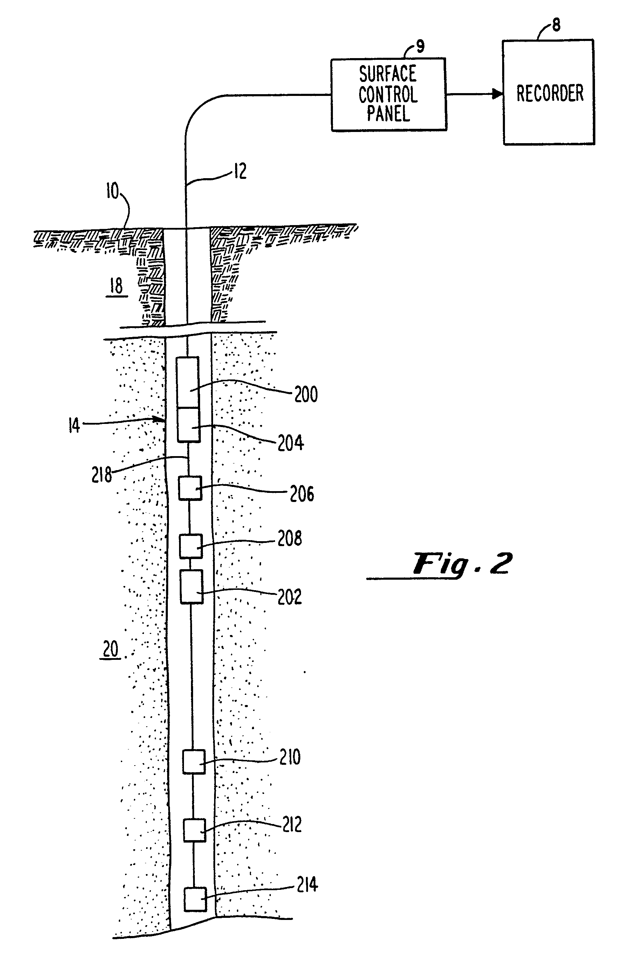

Figure 2 is a diagrammatic illustration similar to Figure 1, showing apparatus according to a second example having a different juxtaposition of transmitters and receivers. Similarcomponents in Figure 2 have been numbered to correspond with the components described in Figure 1, except "200" series numbers are used for the components in Figure 2 instead of the "100" series numbers utilized in connection with Figure 1. In the alternate logging apparatus shown in Figure 2, the compressional wave transmitter 202 has been separated from the shear wave transmitter 204 for the purpose of increasing acoustic isolation. For the purpose of sequencing, shear wave receivers 206 and 208 are still juxtaposed closer to compressional wave transmitter 202 than is any compressional wave receiver. Otherwise, the spacings between each transmitter and its respective receivers are as described in connection with the device of Figure 1.

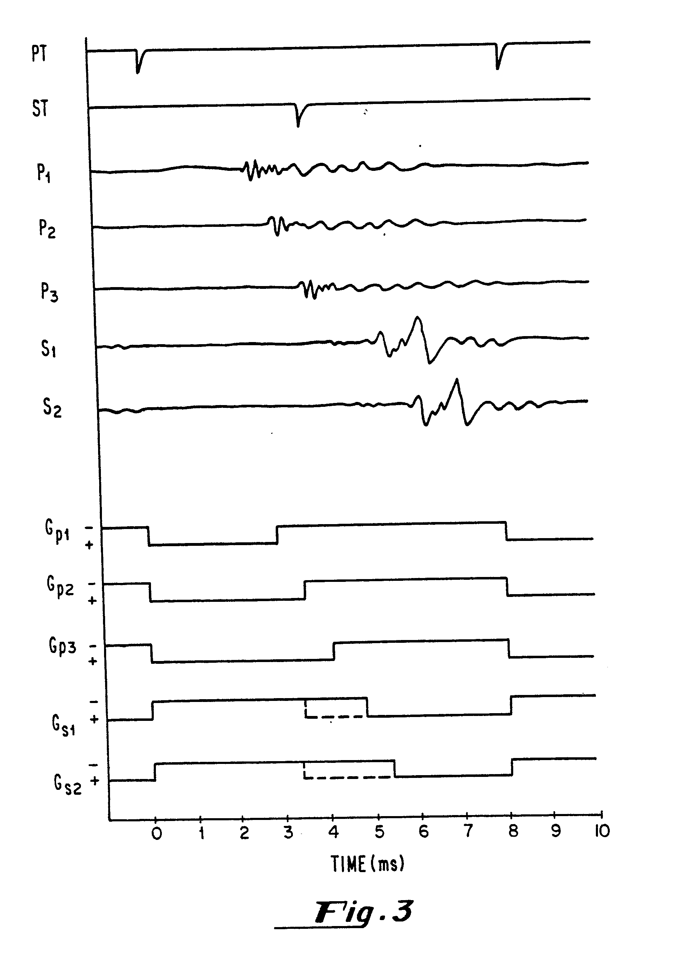

The preferred sequencing for the apparatus illustrated in Figure 1 is set forth in Figure 3, which illustrates slightly more than one duty cycle of this preferred embodiment apparatus. The signals indicated in each of the receiver traces of Figure 3 are based upon experiments conducted in a loosely consolidated formation using shear and compressional waves generated within holes 10 feet apart at a depth of 20 feet. These signals have not been appropriately expanded or contracted as they would have been if generated by receivers located at distances of less than or greater than 3,3 m (10 feet). The signals are nonetheless generally representative of the signals which would be generated by the various receivers of the preferred embodiment apparatus of Figure 1. Similarly, the time scale of Figure 3 is generally representative of the actual velocities of the waves recorded in the above mentioned experiments, but should not be interpreted as limiting the present invention to any particular fixed time sequence. As described hereinafter, the cycling frequency of the preferred embodiment logging tool preferably depends upon the velocities of the waves traveling through surrounding borehole formations.

The top trace (PT) is a trace showing the sequence of activation of the compressional wave transmitter 102. The next lower trace, ST, shows the sequence of activation of the shear wave transmitter 104. In reference to both Figures 1 and 3, upon energization of P wave transmitter 102 at time 0, as indicated by the spike in Figure 3, a compressional wave will be generated which will travel through the surrounding sand formation past the shear wave transmitter 104 and shear wave receivers 106 and 108. This compressional wave is then received by compressional wave receivers 110, 112 and 114, which produce the receiver traces indicated in Figure 3 as traces $P_1$, $P_2$ and $P_3$ respectively. In the preferred embodiment, each of these receivers is gated so that it will transmit its signals beginning from the time that the compressional wave transmitter is energized. The opening of this gating is indicated by the "+" condition of gating traces $G_{p1}$, $G_{p2}$ and $G_{p3}$.

Conventional signal analysis means is preferably utilized to ensure the receipt of the desired information relating to the compressional wave, as reflected in signal traces $P_1$, $P_2$ and $P_3$. Such signal analysis means may, for example "look" for a minimum amplitude of an arriving wave which will be presumed to be the compressional wave front. The time of receipt of this amplitude may then be used to calculate compressional wave velocity.

In the preferred embodiment, the shear wave transmitter 104 is activated in response to the receipt of a compressional wave signal by proximate compressional wave receiver 110, which generates trace $P_1$. In alternate embodiments, the receipt of other compressional wave signals, represented by traces $P_2$ or $P_3$, may be utilized to energize the shear wave transmitter 104. Less preferably, the shear wave transmitter 104 may be activated in time delayed response to the receipt of one of the aforementioned compressional waves, particularly in instances where high levels of acoustic noise have been encountered.

The particular location of the shear wave receivers 106 and 108 adjacent to the compressional wave transmitter 102 ensures that each compressional wave will have passed by receivers 106 and 108 prior to the activation of the shear wave transmitter. The gating for shear wave receivers 106 and 108 may permit the collection of data beginning immediately at the time of energization of the shear wave transmitter 104, as indicated by the dotted lines in Figure 3, or may be delayed for a preselected interval to permit any minor compressional wave which may be generated by the shear transmitter to pass by each shear wave receiver prior to the beginning of shear wave data collection. In this latter instance, the solid lined gating arrangement illustrated in Figure 3 for shear wave receiver 106 ($G_{s1}$) and 108 ($G_{s2}$) would be preferred. Such a time interval is easily calculated using recently collected information relating to compressional wave velocity. Such calculations should account for differential receiver spacings within the tool. Thus, the shear wave receiver gating delay time is simultaneously determined to account for compressional wave velocity variations.

Analysis of shear wave information (Traces S, and $S_2$) is conducted in accordance with conventional prior art procedures, which may be similar to the above referenced compressional wave analysis procedures. Once the receipt of a shear wave front is detected at compressional wave receivers 112 and 114, the compressional wave transmitter 102 may again be energized to restart the duty cycle. As shown by the gating traces in Figure 3, the compressional wave receivers 110—114 will transmit information to the surface control panel while the shear wave receivers are deactivated, and vice versa. In practice, the apparatus is gradually moved through the borehole as the duty cycles are repeated.

Although the timings vary somewhat for the alternate embodiment device of Figure 2, it should be appreciated that the positioning of the receivers and transmitters in the embodiment of Figure 2 permits a cycling of this device in a signal receipt triggered manner similar to that described in connection with the embodiment of Figure 1.

As seen from the above, the present apparatus and method for logging open boreholes in unconsolidated formations facilitate the rapid collection of high quality shear wave and compressional wave data relating to those formations.

## Claims

1. Well logging apparatus for continuously logging the shear and compressional wave transmission characteristics of materials located adjacent to a borehole; comprising:

(a) a plurality of selectively activatable transmitters, said transmitters comprising a first, multidirectional compressional wave transmitter (102; 202) and a second, point source shear wave transmitter (104; 204);

(b) a plurality of receivers, at least one for each transducer, mounted in spaced relation from said transmitters, said receivers comprising a first, compressional wave receiver (110; 210) exhibiting a relatively greater sensitivity to acoustic waves produced by said first transmitter (102; 202), and a second, shear wave receiver (106; 206) exhibiting relatively greater sensitivity to acoustic waves produced by said second transmitter (104; 204); characterized by

(c) sequencing means for selectively energizing the first transmitter (102; 202) in response to the detection of a shear wave by the second receiver (106; 206) and for selectively energizing said second transmitter (104; 204) in response to the detection of a compressional wave by the first receiver (110; 210).

2. Apparatus as claimed in Claim 1, wherein said transmitters and said receivers are mounted on a single logging conduit.

3. Apparatus as claimed in Claim 1 or Claim 2, wherein the distance between said first transmitter (102; 202) and said first receiver (110; 210) is greater than the distance between said second transmitter (104; 204) and said second receiver (106; 206).

4. Apparatus as claimed in Claim 1, wherein said sequencing means sequentially energizes said second transmitter (104; 204) and said first receiver (110; 210) in response to the respective detection of a threshold signal at said first receiver (110; 210) and said second receiver (106; 206).

5. Apparatus as claimed in Claim 1 and further comprising gating means for selectively collecting data from each of said receivers.

6. Apparatus as claimed in Claim 5, wherein said gating means permits the collection of information from said first receiver (110; 210) between the time of energization of said first transmitter (102; 202) to at least the time of receipt of a compressional wave by said first receiver (110; 210).

7. Apparatus as claimed in Claim 5, wherein said gating means permits the collection of information from said second receiver (106; 206) beginning at a time after the energization of said second transmitter (104; 204) to at least the time of receipt of a shear wave at said second receiver (106; 206).

8. Apparatus as claimed in Claim 1, wherein the or each of said second receivers (106, 108) is disposed between said first transmitter (102) and the first receiver (110) or the closest of said first receivers (110, 112, 114) to the first transmitter (102).

9. Apparatus as claimed in Claim 1, wherein said first transmitter (102; 202) and the or each first receiver (110, 112, 114; 210, 212, 214) are disposed substantially adjacent to said second transmitter (104; 204) and the or each second receiver (106, 108; 206, 208), said at least one second receiver (106; 206) being located closer to said first transmitter (102; 202) than the or any of the first receivers (110, 112, 114; 210, 212, 214) is located to said first transmitter (102; 202).

10. Apparatus as claimed in Claim 9, wherein said second transmitter (204) and the or each second receiver (206, 208) are disposed substantially adjacent to and above said first transmitter (202).

## Patentansprüche

1. Bohrlochmeßvorrichtung zum kontinuierlichen Messen der Kennwerte der Übertragung von Schub- und Druckwellen an Materialien, die neben einem Bohrloch festgestellt wurden, die

(a) eine Mehrzahl von selektiv aktivierbaren Übertragern, die einen ersten Mehrrichtungsübertrager (102; 202) für Druckwellen und einen zweiten Punktquellenübertrager (104; 204) für Schubwellen,

(b) eine Mehrzahl von Empfängern, mindestens einen für jeden Energieumwandler, der im Abstand von den genannten Übertragern montiert ist, wobei die Empfänger mindestens einen ersten Empfänger (110; 210) für Druckwellen, der eine relativ größere Empfindlichkeit gegenüber von dem genannten ersten Übertrager (102; 202) erzeugten Schallwellen hat, und einen zweiten Empfänger (106; 206) für Schubwellen, der eine relativ größere Empfindlichkeit gegenüber von dem genannten zweiten Empfänger (104; 204) erzeugten Schallwellen hat, aufweist, gekennzeichnet durch

(c) aufeinanderfolgende Mittel zum selektiven Erregen des ersten Übertragers (102; 202) in Antwort auf dk Feststellen einer Schubwelle durch den zweiten Empfänger (106; 206) sowie zum selektiven Erregen des genannten zweiten Übertragers (104; 204) in Antwort auf die Feststellung einer Druckwelle durch den ersten Empfänger (110; 210).

2. Vorrichtung nach Anspruch 1, worin die genannten Übertrager und Empfänger an einer einzigen Meßleitung angeordnet sind.

3. Vorrichtung nach Anspruch 1 oder 2, worin der Abstand zwischen dem ersten Übertrager (102; 202) und dem ersten Empfänger (110; 210) größer ist als der Abstand zwischen dem zweiten Übertrager (104; 204) und dem zweiten Empfänger (106; 206).

4. Vorrichtung nach Anspruch 1, worin die genannten aufeinanderfolgenden Mittel der Reihe nach den zweiten Übertrager (104; 204) und den ersten Empfänger (110; 210) erregen in Antwort auf das entsprechende Feststellen eines Schwellensignals am ersten Empfänger (110; 210) und am zweiten Empfänger (106; 206).

5. Vorrichtung nach Anspruch 1, die weiterhin Mittel zur Signalauswertung für ein selektives Sammeln von Daten von jedem der genannten Empfänger aufweisen.

6. Vorrichtung nach Anspruch 5, worin die genannten Mittel zur Signalauswertung das Sammeln von Informationen von dem ersten Empfänger (110; 210) zwischen der Zeit des Erregens des ersten Übertragers (102; 202) bis mindestens der Zeit des Empfangs einer Druckwelle durch den ersten Empfänger (110; 210) erlauben.

7. Vorrichtung nach Anspruch 5, worin die genannten Mittel zur Signalauswertung das Sammeln von Informationen von dem zweiten Empfänger (106; 206), beginnend zu einer Zeit nach dem Erregen des zweiten Übertragers (104; 204) bis zu mindestens der Zeit des Empfangs einer Schubwelle an dem zweiten Empfänger (106; 206), erlauben.

8. Vorrichtung nach Anspruch 1, worin der oder jeder der zweiten Empfänger (106; 108) zwischen dem ersten Übertrager (102) und dem ersten Empfänger (110) oder dem ersten Empfänger (110, 112, 114), der dem ersten Übertrager (102) am nächsten liegt, angeordnet sind.

9. Vorrichtung nach Anspruch 1, worin der erste Übertrager (102; 202) und der oder jeder der ersten Empfänger (110, 112, 114; 210, 212, 214) im wesentlichen neben dem zweiten Übertrager (104; 204) und dem oder jedem der zweiten Empfänger (106, 108; 206, 208) angeordnet ist, wobei mindestens ein zweiter Empfänger (106; 206) sich näher an dem ersten Übertrager (102; 202) befindet als der oder irgendeiner der ersten Empfänger (110, 112, 114; 210, 212, 214) an dem ersten Übertrager (102; 202) angeordnet ist.

10. Vorrichtung nach Anspruch 9, worin der zweite Übertrager (204) und der oder jeder der zweiten Empfänger (206, 208) im wesentlichen neben und über dem ersten Übertrager (202) angeordnet ist.

**Revendications**

1. Appareil de diagraphie de puits de forage permettant d'effectuer de manière continue l'analyse diagraphique des caractéristiques d'émission des ondes de cisaillement et de compression pour des matériaux placés ou voisinage d'un trou de sondage; comprenant:

(a) plusieurs émetteurs pouvant être sélectivement activés, lesdits émetteurs comprenant un premier émetteur d'ondes de compression multidirectionnel (102; 202) et un deuxième émetteur d'ondes de cisaillement à source ponctuelle (104; 204);

(b) plusieurs récepteurs, à raison d'au moins un pour chaque émetteur, montés à une certaine distance desdits émetteurs, lesdits récepteurs comprenant un premier récepteur, d'ondes de compression, (110; 210) qui présente une sensibilité relativement plus importante vis-à-vis des ondes acoustiques produit par ledit premier émetteur (102; 202) et un deuxième récepteur, d'ondes de cisaillement, (106; 206) présentant une sensibilité relativement plus importante vis-à-vis des ondes acoustiques produites par ledit deuxième émetteur (104; 204); caractérisé par:

(c) un moyen de mise en séquence servant à sélectivement exciter le premier émetteur (102; 202) en réponse à la détection d'une onde de cisaillement par le deuxième récepteur (106; 206) et à sélectivement exciter ledit deuxième émetteur (104; 204) en réponse à la détection d'une onde de compression par le premier récepteur (110; 210).

2. Appareil selon la revendication 1, où lesdits émetteurs et lesdits récepteurs sont montés sur une unique conduite de diagraphie.

3. Appareil selon la revendication 1 ou 2, où la distance entre ledit premier émetteur (102; 202) et ledit premier récepteur (110; 210) est plus grande que la distance entre ledit deuxième émetteur (104; 204) et ledit deuxième récepteur (106; 206).

4. Appareil selon la revendication 1, où ledit moyen de mise en séquence excite séquentiellement ledit deuxième émetteur (104; 204) et ledit premier récepteur (110; 210) en réponse à la détection respective d'un signal de seuil au niveau dudit premier récepteur (110; 210) et dudit deuxième récepteur (106; 206).

5. Appareil selon la revendication 1, comprenant en outre un moyen de déclenchement servant à sélectivement recueillir des données de la part de chacun desdits récepteurs.

6. Appareil selon la revendication 5, où ledit moyen de déclenchement permet le recueil d'information en provenance dudit premier récepteur (110; 210) entre le moment d'excitation dudit premier émetteur (102; 202) au moins jusqu'au moment de réception d'une onde de compression par ledit premier récepteur (110; 210).

7. Appareil selon la revendication 5, où ledit moyen de déclenchement permet le recueil d'information de la part dudit deuxième récepteur (106; 206) à partir d'un instant venant après l'excitation dudit deuxième émetteur (104; 204) au moins jusqu'à l'instant de réception d'une onde de cisaillement au niveau dudit deuxième récepteur (106; 206).

8. Appareil selon la revendication 1, où le deuxième récepteur ou chacun desdits deuxièmes récepteurs (106, 108) est disposé entre ledit premier émetteur (102) et le premier récepteur (110) ou celui desdits premiers récepteurs (110, 112, 114) qui est le plus rapproché du premier émetteur (102).

9. Appareil selon la revendication 1, où ledit premier émetteur (102; 202) et le premier récepteur ou chaque premier récepteur (110, 112, 114; 210, 212, 214) sont disposés sensiblement au voisinage dudit deuxième émetteur (104; 204) et du deuxième récepteur ou de chaque deuxième récepteur (106, 108; 206, 208), le ou les deuxièmes récepteurs (106; 206) étant placés plus près du premier émetteur (102; 202) que le premier récepteur ou n'importe lequel des premiers récepteurs (110, 112, 114; 210, 212, 214) n'est placé par rapport audit premier émetteur (102; 202).

10. Appareil selon la revendication 9, où ledit deuxième émetteur (204) et le deuxième récepteur ou chaque deuxième récepteur (206, 208) sont disposés sensiblement au voisinage et au-dessus dudit premier émetteur (202).

*Fig.1*

_Fig . 2_

**0 089 431**

TIME (ms)

_Fig. 3_

3